# EUROPÄISCHE PATENTANMELDUNG

(11) **EP 1 650 935 A2**
(43) Veröffentlichungstag der Anmeldung: **26.04.2006**
(21) Anmeldenummer: 05108776.5
(22) Anmeldetag: 22.09.2005
(51) Int. Cl.: H04M 1/02, G09F 13/00

(54) **Individuell anpassbare Geräteoberfläche**

(30) Priorität: 19.10.2004 DE 102004050904
(71) Anmelder: SIEMENS AKTIENGESELLSCHAFT, 80333 München (DE)
(72) Erfinder: Breimesser, Fritz, 90491, Nürnberg (DE); Hassel, Jörg, 91058, Erlangen (DE); Lades, Ingeborg, 91056, Erlangen (DE)

(57) **Zusammenfassung**

Die Erfindung betrifft eine Vorrichtung mit einer Elektronikkomponente, die zumindest einen Teil einer Oberfläche der Vorrichtung bedeckt. Um selbst bei Großserienfertigung einer Vorrichtung eine größtmögliche Individualisierung zu ermöglichen ist es vorgesehen, dass die Elektronikkomponente sowohl eine Anzahl von Schaltelementen als auch eine Anzahl von Leuchtelementen zur Oberflächengestaltung aufweist. Durch die Leuchtelemente kann das Aussehen der Oberfläche der Vorrichtung entsprechend den Nutzerwünschen gestaltet werden.

## Beschreibung

Die Erfindung betrifft eine Vorrichtung mit einer Elektronikkomponente, die zumindest einen Teil einer Oberfläche der Vorrichtung bedeckt.

Bei der Kaufentscheidung von Gebrauchsgütern im privaten und Industriebereich spielt es eine wichtige Rolle, inwieweit ein Nutzer das Gerät entsprechend seinen individuellen Vorstellungen anpassen kann. Dies gilt zum einen für die Anpassung der Benutzeroberfläche. Zum anderen spielen jedoch auch das Aussehen und die Farbgebung des Gerätes eine immer größere Rolle.

Eine Aufgabe der Erfindung ist es, eine Vorrichtung bereitzustellen, die selbst bei Großserienfertigung eine größtmögliche Individualisierung an die Vorstellungen des Nutzers ermöglicht. Diese Aufgabe wird durch eine Vorrichtung nach Anspruch 1 gelöst.

Erfindungsgemäß ist dabei vorgesehen, dass die Vorrichtung eine Elektronikkomponente aufweist, die zumindest einen Teil einer Oberfläche der Vorrichtung ausmacht und sowohl eine Anzahl von Schaltelementen als auch eine Anzahl von Leuchtelementen zur Oberflächengestaltung aufweist. Hierdurch wird nicht nur die Anpassung der Benutzeroberfläche an die Wünsche des Nutzers ermöglicht. Durch die Leuchtelemente kann das Aussehen der Oberfläche der Vorrichtung entsprechend den Nutzerwünschen gestaltet werden. Ist die Elektronikkomponente dabei auf der gesamten Oberfläche der Vorrichtung oder aber auf zumindest wesentlichen Teilen hiervon vorgesehen, so kann praktisch das gesamte Äußere der Vorrichtung den Wünschen des Nutzers angepasst werden. Eine Farblackierung in bestimmten Farben, beispielsweise in den "Hausfarben" des Herstellers, das Aufbringen von Produkt- oder Herstellernamen bzw. -logos und dergleichen kann ebenfalls mit Hilfe der Leuchtelemente erfolgen. Mit anderen Worten ist eine Individualisierung jeder einzelnen Vorrichtung dahingehend möglich, dass sowohl Groß- oder Kleinserien als auch Einzelstücke ein individuelles Design erhalten. Zugleich gibt es keine technischen Unterschiede zwischen den verwendeten Vorrichtungen. Sämtliche Geräte sind identisch und entstammen einer einzigen Fertigung. Dennoch kann jedes einzelne dieser Geräte mit Hilfe der Leuchtelemente individuell angepasst werden.

Die vorliegende Erfindung ist sowohl bei Gebrauchsgütern, beispielsweise bei Mobiltelefonen, Videokonsolen oder beliebigen anderen Vorrichtungen einsetzbar. Ein anderes Einsatzfeld sind industrielle Geräte, beispielsweise Bedienterminals von Automatisierungsgeräten, Teile von Maschinen oder aber Maschinen selbst.

Neben einer bestimmten einheitlichen Farbgebung der Oberfläche einer Vorrichtung können darüber hinaus beispielsweise auch bestimmte Muster auf der Oberfläche abgebildet werden. So ist es beispielsweise bei dem Einsatz der Erfindung bei Mobiltelefonen denkbar, ein bestimmtes Design einer Gehäuseschale durch eine entsprechend vorgesehene Elektronikkomponente darzustellen. Mit anderen Worten können dann nicht nur Klingeltöne, sondern auch Gehäusedesigns entsprechend dem individuellen Geschmack des Nutzers ausgewählt und verwendet werden. Neben einer bloßen Farb- bzw. Mustergebung der Vorrichtung besteht darüber hinaus die Möglichkeit, den Gerätestatus des Mobiltelefons durch eine Änderung der Telefonoberfläche anzuzeigen. Beispielsweise kann sich bei einem Mobiltelefon, welches mit einer solchen Elektronikkomponente ausgestattet ist, bei einem ankommenden Anruf die Farbe des Telefongehäuses ändern oder aber das gesamte Telefongehäuse kann bei einem ankommenden Anruf zu blinken anfangen. Ähnliche Anwendungsfälle sind auch bei industriellen Geräten denkbar. So kann die Elektronikkomponente beispielsweise an eine Fehlererkennung des Gerätes angeschlossen sein, so dass beispielsweise ein fehlerhaftes Bauteil einer Maschine, einer Industrieanlage oder einer Rechenanlage, welches ausgefallen ist oder kurz vor einem Ausfall steht, großflächig blinken oder sich in einer anderen Art und Weise optisch bemerkbar machen kann.

Vorteilhafte Ausführungsformen der Erfindung sind in den Unteransprüchen angegeben.

Besonders vorteilhaft ist danach, dass die Elektronikkomponente ein Ansteuermodul aufweist. Das Ansteuermodul ist zur Ansteuerung der Schalt- und Leuchtelemente ausgebildet. Es ist vorzugsweise mit einem Speichermodul verbunden, dass der Speicherung einer Anzahl von Oberflächenmustern oder anderen Designs dient. Bei dem gespeicherten Muster kann es sich beispielsweise um einen "Basissatz" handeln, der vom Hersteller des Gerätes mitgeliefert wird. Darüber hinaus kann das Speichermodul auch eine Anzahl weiterer Muster bzw. Design speichern. Ganz besonders vorteilhaft ist es in diesem Zusammenhang, wenn die Elektronikkomponente über eine Schnittstelle zu einer externen Musterquelle verbindbar ist. Dabei kann es sich beispielsweise um eine Schnittstelle zu einem Rechnernetzwerk, beispielsweise zum Internet handeln, so dass Muster von einer Internetseite des Herstellers oder von Internetseiten anderer Anbieter heruntergeladen bzw. in das Speichermodul eingespielt werden können.

Die Auswahl des verwendeten Designs kann dabei von dem Nutzer individuell ausgewählt und jederzeit geändert werden. Dabei können vorzugsweise nicht nur die in dem Speichermodul gespeicherten Muster, sondern auch hieraus abgeleitete Muster zum Einsatz kommen. So können beispielsweise zwei oder mehrere Muster miteinander kombiniert werden. Eine solche Kombination kann insbesondere darin bestehen, dass zwei verschiedene Designs durch Überlagerung "gemischt" werden. Andererseits ist es ebenso möglich, dass beispielsweise die Vorderschale eines Mobiltelefons mit einem ersten Muster und die Rückschale des Mobiltelefons mit einem zweiten Muster versehen wird. Unter dem Begriff "Muster" werden dabei nicht nur Verzierungen, sondern beliebige Farbgebungen verstanden.

Ganz besonders vorteilhaft ist die Verwendung einer Elektronikkomponente auf Polymer-Basis. Als Leuchtelemente zur Gestaltung der Oberfläche werden insbesondere organische lichtemittierende Dioden (OLED) verwendet. Im Vergleich zu aufwendigen Beschichtungs- bzw. Ätztechniken auf Basis herkömmlicher Halbleiter lassen sich derartige elektronische Schaltungen mit relativ einfachen Druckverfahren aufbringen. Eine derartige Polymerelektronik ermöglicht eine sehr genaue und zudem preisgünstige Massenfertigung durch ein Aufdrucken der Elektronik auf die Geräteoberfläche durch Sieb-, Tampon-, Offset-, Tief- bzw. Tintenstrahldruck oder Microcontact Printing. Vorzugsweise sind sämtliche Bestandteile der Elektronikkomponente in dieser Technik ausgeführt.

Ein Ausführungsbeispiel der vorliegenden Erfindung wird nachfolgend näher beschrieben. Dabei zeigt:
- FIG 1: einen Querschnitt durch eine Oberfläche eines Mobiltelefons,
- FIG 2: eine Draufsicht auf ein Mobiltelefon,
- FIG 3: eine weitere Draufsicht auf ein Mobiltelefon.

Ein Mobiltelefons 1 weist auf seiner Vorderseite 2 eine Elektronikkomponente 3 auf. Die Elektronikkomponente 3 besteht im Wesentlichen aus einer Ansteuerelektronik 4 mit einem Speicherelement 5 und einer auf der Ansteuerelektronik 4 aufgebrachten lichtemittierenden Schicht 6 mit symbolhaft dargestellten OLEDs 7 und Schaltelementen 8. Dabei ist die gesamte Elektronikkomponente 3 auf Polymer-Basis hergestellt und auf das Gehäuse 9 des Mobiltelefons 1 aufgedruckt. Über eine in der Ansteuerelektronik 3 integrierte Schnittstelle (nicht abgebildet) lassen sich verschiedene Muster bzw. Designs von einer externen Quelle (nicht abgebildet) in das Speicherelement 5 laden. Die Bedienung des Mobiltelefons 1 erfolgt über die dargestellten Schaltelemente 8 auf dessen Oberfläche. Die gleichen Schaltelemente 8 dienen auch der Bedienung der Ansteuerelektronik 3.

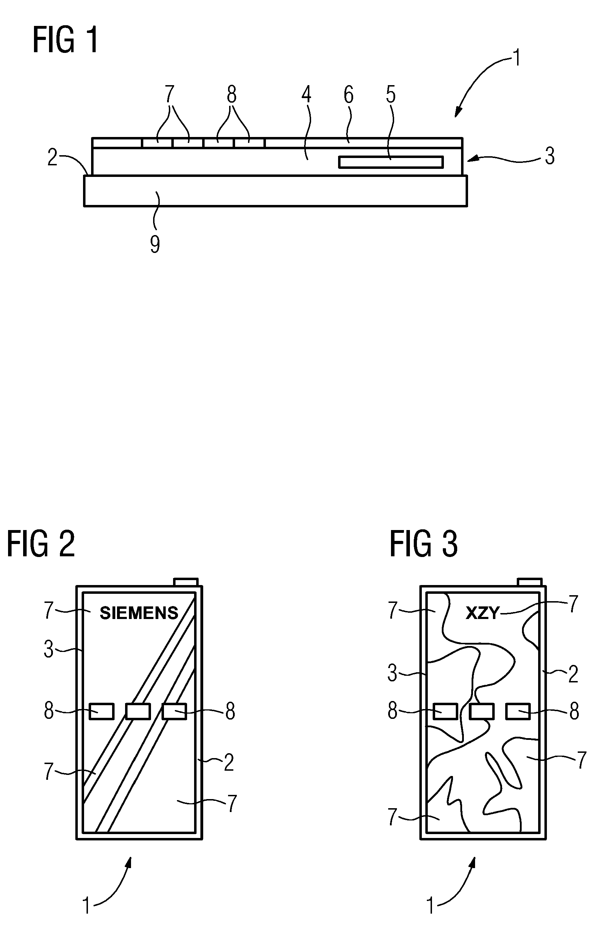

FIG 2 zeigt symbolisch eine Draufsicht auf die Vorderseite 2 eines Mobiltelefons 1 mit integrierter Elektronikkomponente 3. Nahezu die gesamte Vorderschale des Mobiltelefons 1 ist dabei als ansteuerbare Oberfläche ausgebildet. Dabei sind die üblichen Bedienelemente eines Mobiltelefons 1 als Schaltelemente 8 der Elektronikkomponente 3 ausgebildet, während die gesamte übrige Fläche aus Leuchtelementen 7 gebildet wird, die einen Wechsel des Oberflächendesigns ermöglichen. So ist beispielsweise durch das einfache Laden eines neuen Musters das Aussehen des Mobiltelefons 1 von der in FIG 2 gezeigten Form in die in FIG 3 gezeigte Form möglich.

Die ebenfalls in Polymer-Technik ausgeführten Schaltelemente 8 sind vorzugsweise als Berührungsschalter ausgebildet. Das verwendete Funktionsprinzip (Elektrostatik, Resonanzmagnetismus etc.) kann je nach Anwendungsfall variieren.

## Patentansprüche

1. Vorrichtung (1) mit einer Oberfläche (2), die zumindest teilweise mit einer Elektronikkomponente (3) bedeckt ist, wobei die Elektronikkomponente (3) eine Anzahl von Schaltelementen (8) zur Bedienung der Vorrichtung (1) und eine Anzahl von Leuchtelementen (7) zur Gestaltung des Aussehens der Oberfläche (2) aufweist.

2. Vorrichtung (1) nach Anspruch 1, **dadurch ge** - **kennzeichnet**, dass die Elektronikkomponente (3) ein Ansteuermodul (4) aufweist.

3. Vorrichtung (1) nach Anspruch 1 oder 2, **dadurch** - **gekennzeichnet** , dass die Elektronikkomponente (3) ein Speichermodul (5) aufweist.

4. Vorrichtung (1) nach einem der Ansprüche 1 bis 3, **ge** - **kennzeichnet durch** eine Elektronikkomponente (3) auf Polymer-Basis.
